(19) Europäisches Patentamt
European Patent Office
Office européen des brevets

(11) **EP 2 403 289 A1**

(12) **EUROPEAN PATENT APPLICATION**
published in accordance with Art. 153(4) EPC

(43) Date of publication:
**04.01.2012 Bulletin 2012/01**

(51) Int Cl.:
*H04W 28/00* (2009.01)

(21) Application number: **10809491.3**

(22) Date of filing: **28.05.2010**

(86) International application number:
**PCT/CN2010/073353**

(87) International publication number:
**WO 2011/020358 (24.02.2011 Gazette 2011/08)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **18.08.2009 CN 200910165691**

(71) Applicant: **ZTE Corporation**
**Shenzhen, Guangdong 518057 (CN)**

(72) Inventors:
• **ZHAI, Hengxing**
**Shenzhen**
**Guangdong 518057 (CN)**
• **AI, Jianxun**
**Shenzhen**
**Guangdong 518057 (CN)**

(74) Representative: **Petraz, Gilberto Luigi et al**
**GLP S.r.l.**
**Piazzale Cavedalis 6/2**
**33100 Udine (IT)**

(54) **CONFIGURATION METHOD, DEVICE AND SYSTEM FOR RESOURCE OCCUPIED BY MULTICAST CONTROL CHANNEL**

(57) A method, device and system for configuring resources occupied by a multicast control channel (MCCH) are disclosed, which relate to the field of wireless communication and solve the problem that a user equipment (UE) cannot acquire the physical resources occupied by the MCCH. The method comprises: a specified network element generating at least one subframe allocation pattern (SAP) in accordance with a set of Multicast/Broadcast over Single Frequency Network (MBSFN) subframes bearing the MCCH; the specified network element sending an SAP configuration message to a network layer device, wherein the SAP configuration message carries at least one SAP generated by the specified network element or an index value of at least one SAP generated by the specified network element to indicate the network layer device to send the information of the MCCH according to the corresponding SAP. The method solves the problem that UE cannot acquire the physical resources occupied by the MCCH.

FIG. 1

EP 2 403 289 A1

**EP 2 403 289 A1**

**Description**

Technical Field

The present invention relates to the field of wireless communication, and in particular, to a method, device and system for configuring resources occupied by a multicast control channel (MCCH).

Background Art

In 2005, the 3rd generation partnership project (3GPP) initiated a working group for researching long term evolution (LTE), and the working group studied and designed the next generation network of evolved 3.9G (improved 3G) of the 3rd generation mobile communication technology.

In order to effectively utilize mobile network resources, 3GPP brought up multimedia broadcast multicast service (MBMS) to provide, in a mobile network, point-to-multiple point services that a data source transmitting data to multiple users, thereby achieving sharing of network resources and improving the utilization ratio of network resources, especially valuable air interface resources. Multiple cells transmit the same MBMS data on the same time frequency resource, i.e., MBMS service information or control information adopts the way of content synchronization, which is called as multicast/broadcast over single frequency network (MBSFN) transmission mode. In a LTE network, MBMS technique is referred to as an evolved multimedia broadcast multicast service (E-MBMS).

In LTE frequency-division duplex (FDD) and LTE time-division duplex (TDD), on a hybrid carrier carrying not only multicast services but also unicast services, wireless frame is divided into MBSFN frame (for carrying multicast services, for example: broadcast services) and non-MBSFN frame (i.e., unicast frame, which is used for carrying unicast services, for example: common voice services). Part of subframes in an MBSFN frame adopt MBSFN emission manner, and this part of subframes are called as MBSFN subframes; and other subframes are non-MBSFN subframes (i.e., unicast subframes), which adopt unicast emission manner, instead of MBSFN emission manner.

The data channel of an MBMS service is a multicast data channel (MTCH, which is a logic channel). A plurality of MTCHs can be mapped to the same multicast channel (MCH, which is a transmission channel). One transmission channel or a plurality of MCHs is mapped to the same physical multicast channel (PMCH). One PMCH occupies the physical resources of one set of MBSFN subframes. While a multicast control channel (MCCH) is a logic channel for carrying MBMS service control information, and the MCCH is also mapped to the transmission channel MCH. The MCCH may be also mapped separately or may be mapped to the same transmission channel together with one or more MTCHs.

In the process of realizing MCCH information transmission through the transmission channel, there are the following problems:

The MCCH carries information, such as MCH/PMCH resource configuration, status, identification and the like, of an MBMS service. In order to receive a specific MBMS service, a UE firstly needs to receive and obtain the MCCH message, then the UE receives the information on the MTCH. There is still no solution mechanism currently on how to let the UE know which physical resources of the MCH/PMCH are occupied by the MCCH while the MCCH is multiplexed and mapped with the MTCH to the same MCH/PMCH.

Summary of the Invention

The present invention provides a method, device and system for configuring resources occupied by a multicast control channel to solve the problem that the UE cannot acquire the physical resources occupied by the MCCH.

A method for configuring resources occupied by a multicast control channel comprises:

a specified network element generating at least one subframe allocation pattern (SAP) in accordance with a set of ulticast/Broadcast over Single Frequency Network (MBSFN) subframes bearing the multicast control channel; and

the specified network element sending an SAP configuration message to a network layer device, wherein the SAP configuration message carries at least one SAP generated by the specified network element or an index value of at least one SAP generated by the specified network element to indicate the network layer device to send information of the multicast control channel according to the corresponding SAP.

Wherein, before the step of the specified network element generating at least one SAP in accordance with a set of subframes of an MBSFN bearing the multicast control channel, the method further comprises:

the specified network element determining a repetition period of the multicast control channel, and selecting at least

2

one MBSFN subframe in one repetition period to constitute a set of MBSFN subframes.

Wherein, if the SAP configuration message carries an index value of at least one SAP generated by the specified network element, then before the step of sending an SAP configuration message to the network layer device, the method further comprises:

the specified network element allocating the index value for each SAP, and sending all SAPs corresponding to the set of MBSFN subframes to the network layer device.

Wherein, the SAP configuration message further carries an indication message for indicating the network layer device to select part of MBSFN subframes in at least one SAP for sending the information of the multicast control channel, and the indication message comprises:

an MBSFN subframe bitmap of each SAP, for indicating the network layer device to determine the MBSFN subframes, in a corresponding SAP, used for sending the information of the multicast control channel according to the subframe bitmap; or,

period and offset of wireless frames corresponding to subframes in the set of MBSFN subframes, for indicating the network layer device to determine the MBSFN subframes, in a corresponding SAP, used for sending the information of the multicast control channel according to the period and offset of the wireless frames.

A specified network element comprises:

an SAP generation module configured to: generate at least one SAP in accordance with a set of MBSFN subframes bearing the multicast control channel; and

an SAP configuration message sending module configured to: send an SAP configuration message to a network layer device according to the at least one SAP generated by the SAP generating module, wherein the SAP configuration message carries at least one SAP generated by the SAP generation module or an index value of at least one SAP generated by the SAP generation module to indicate the network layer device to send information of the multicast control channel according to the corresponding SAP.

Wherein the above specified network element further comprises:

an MBSFN subframe set generation module configured to: determine a repetition period of the multicast control channel, and select at least one MBSFN subframe in one repetition period to constitute the set of MBSFN subframes.

Wherein the above specified network element further comprises:

an SAP sending module configured to: allocate the index value for each SAP, and send all SAPs corresponding to the set of MBSFN subframes to the network layer device.

A system for configuring resources occupied by a multicast control channel comprises a specified network element and a network layer device; wherein,

The specified network element is configured to: generate at least one SAP in accordance with a set of MBSFN subframes bearing the multicast control channel, and send an SAP configuration message to the network layer device, wherein the SAP configuration message carries at least one SAP generated by the specified network element or an index value of at least one SAP generated by the specified network element to indicate the network layer device to send information of the multicast control channel according to the corresponding SAP; and

the network layer device is configured to: receive the SAP configuration message sent by the specified network element, and send the information of the multicast control channel according to the SAP indicated by the SAP configuration message.

Wherein the specified network element is further configured to: determine a repetition period of the multicast control channel, and select at least one MBSFN subframe in one repetition period to constitute the set of MBSFN subframes.

Wherein the specified network element is further configured to: allocate the index value for each SAP, and send all SAPs corresponding to the set of MBSFN subframes to the network layer device.

The embodiments of the present invention provide a method, device and system for configuring resources occupied by a multicast control channel. The specified network element generates at least one subframe allocation pattern (SAP) in accordance with the set of Multicast/Broadcast over Single Frequency Network (MBSFN) subframes bearing the multicast control channel, and sends the SAP configuration message to the network layer device to indicate the network layer device to send the information of the MCCH according to the SAP generated by the specified network element, thereby solving the problem that UE cannot acquire the physical resources occupied by the MCCH.

Brief Description of Drawings

FIG. 1 is a flow chart of a method for configuring resources occupied by a multicast control channel according to the first embodiment of the present invention;

FIG. 2 is a schematic diagram of a subframe location selected through period and offset according to the first embodiment of the present invention;

FIG. 3 is a flow chart of a method for configuring resources occupied by a multicast control channel according to the second embodiment of the present invention;

FIG. 4 is a schematic diagram of a structure of a specified network element according to an embodiment of the present invention;

FIG. 5 is a schematic diagram of a structure of a specified network element according to another embodiment of the present invention; and

FIG. 6 is a schematic diagram of a structure of a system for configuring resources occupied by a multicast control channel according to an embodiment of the present invention.

Preferred Embodiments of the Invention

The embodiments of the present invention provide a method for configuring resources occupied by a multicast control channel (MCCH), and a mechanism for informing the user equipment (UE) of the physical resources occupied by the MCCH. In the embodiments of the present invention, subframe allocation pattern is specifically used to describe the physical resources occupied by the MCCH. Firstly, SAP will be introduced.

The location of an MBSFN subframe is indicated on a system information block 2 (SIB2) of a system broadcast message. The SIB2 includes one or more MBSFN subframe configurations, and each MBSFN subframe configuration is called as an SAP.

In a LTE network, regardless of FDD or TDD and regardless of whether an MBMS service is received or not, a user equipment (UE) always needs to know whether each wireless frame is an MBSFN frame or not, and also needs to know whether each subframe in each MBSFN frame adopts MBSFN, i.e., the UE needs to know each subframe is an MBSFN subframe or a non-MBSFN subframe, so as to enable the UE to perform measurement and channel evaluation on different subframes. Therefore, an evolved universal terrestrial radio access network (E-UTRAN, Evolved UTRAN) needs to inform the UE of the above information of each wireless frame and the subframes in the wireless frame through a system broadcasting message.

The first embodiment of the present invention will be described with reference to the accompanying drawings.

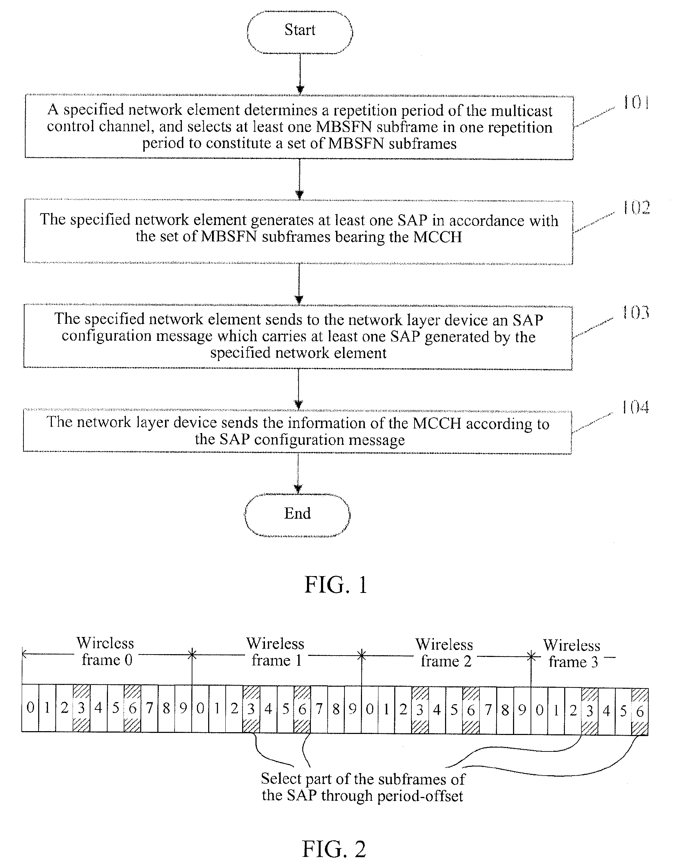

The first embodiment of the present invention provides a method for configuring resources occupied by a multicast control channel to solve the problem that the UE cannot acquire the physical resources occupied by the MCCH. The flow of the method is shown in FIG. 1, comprising the following steps.

Step 101, a specified network element determines a repetition period of the multicast control channel, and selects at least one MBSFN subframe in one repetition period to constitute a set of MBSFN subframes.

In the embodiment of the present invention, the specified network element is a multi-cell/multicast coordination entity (MCE), and a network layer device is a base station (evolved NodeB, eNB).

In the step 101, MCE firstly determines the repetition period of the MCCH.

An MCCH message is a repeatedly transmitted message, i.e., it is repeatedly transmitted once a regular time interval, and the time interval is called as the repetition period of the MCCH. The SAP needs to be transmitted before the physical resources occupied by the MCCH and transmitted at least once, since the SAP that needs to be transmitted in the embodiment of the present invention is used to describe the information of the physical resources occupied by the MCCH. The SAP may be periodically transmitted, or may be transmitted only when the physical resources allocated by the MCH for the MCCH is changing.

If the SAP is periodically transmitted, then the MCH configures the repetition period of the MCCH to be integral multiple of the period of the SAP.

In the step 101, the MCE determines a group of MBSFN subframes for constituting a set of MBSFN subframes according to the repetition period of the MCCH that has been determined and further the parameters of MBMS received by the eNB.

The parameters of MBMS include at least one of the following information:

an MBMS identifier, an MBMS area, an MBSFN area and an MBMS scheduling period. Of course, the information included in the parameters of MBMS is not limited to the above information, and the present invention does not make definition on this.

Step 102, the specified network element generates at least one SAP in accordance with the set of MBSFN subframes bearing the MCCH;

In the step 102, the MCE generates at least one SAP in accordance with the set of MBSFN subframes determined in step 101.

A set of MBSFN subframes can be described by one or more SAP. For example, different SAPs describe the MBSFN subframes occupied by MCCHs of different services, and these SAPs collectively describe the whole set of MBSFN subframes.

Step 103, the specified network element sends to the network layer device an SAP configuration message which carries at least one SAP generated by the specified network element.

In the embodiment of the present invention, the SAP configuration message is a session initiation message.

In the step 103, the MCE indicates the physical resources occupied by the eNB MCCH by carrying in the session initiation message the SAPs describing the set of MBSFN subframes.

Specially, a list of SAP information is carried in the session initiation message, and each item in the list corresponds to one SAP describing the set of MBSFN subframes.

In the SAP list, the order of the items is set by the specified network element, or is preset.

For example, a set of MBSFN subframes corresponds to three SAPs, namely, SAP-1, SAP-2, and SAP-3 respectively. The SAPs corresponding to the services used in the embodiment of the present invention are SAP-1 and SAP-2, then the MCE will carry SAP-1 and SAP-2 in the session initiation message, i.e., the SAP list has two items.

Optionally, the MCE may also allocate index values for the items in the SAP list before sending the SAP configuration message. For example, the MCE allocates an index value 0 for SAP-1 and allocates an index value 1 for SAP-2 when carrying SAP-1 and SAP-2 in the session initiation message.

After receiving the session initiation message, the eNB sends the information of the MCCH on the MBSFN subframes occupied by the MCCH according to the SAP carried in the session initiation message; optionally, eNB can also store the received SAP.

Optionally, the MCE can also designate that the eNB only sends the information of the MCCH on part of the MBSFN subframes in one SAP, or on part of the MBSFN subframes in a plurality of SAPs. The specific selecting method is as follows:

Method one defines an SAP bitmap, and the bitmap is carried in the SAP configuration message. The SAP location defines in the MBSFN subframes described by the SAP which subframes are used to send the information of the MCCH. For example, the bitmap of a certain SAP is 111100, which indicates for FDD that subframes #1, #2, #3 and #6 are configured to be the MBSFN subframes provided for the eNB to send the information of the MCCH; and which indicates for TDD that subframes #3, #4, #7 and #8 are configured to be the MBSFN subframes provided for the eNB to send the information of the MCCH.

Method two defines period and offset of the subframes used by the eNB to send the information of the MCCH.

Each SAP includes information of a wireless frame hierarchy and information of a wireless subframe hierarchy, which will be illustrated as follows:

There are 32 wireless frames in a period of 320ms, and each wireless frame includes ten subframes, so that there are 320 subframes in total, wherein, part of the subframes are the MBSFN subframes.

The information of the wireless frame hierarchy indicates the location of the wireless subframe where the MBSFN subframes are located. The wireless frame hierarchy adopts the manner of the period and the offset to indicate which wireless frames in one time period are the wireless frames configured with the MBSFN subframes. The wireless frames meeting the following formula are the MBSFN frames:

$$SFN \bmod radioFrameAllocationPeriod = radioFrameAllocationOffset,$$

wherein, SFN is the frame number of the wireless frame; radioFrameAllocationPeriod is the allocation period of the wireless frame; and radioFrameAllocationOffset is the allocation offset of the wireless frame.

The information of the wireless subframe hierarchy, i.e., the location of the MBSFN subframe in the MBSFN frame, is described by the bitmap (BITMAP). The subframes in each wireless frame are numbered with #0 to #9, and it is regulated that the distribution of the MBSFN subframes in each MBSFN frame is the same, i.e., both the number of the MBSFN subframes and serial number of the MBSFN subframe in each MBSFN frame are the same. The Bitmap of the allocation mode of the wireless frames adopts 6bit, which is represented with {Bit0, Bit1, Bit2, Bit3, Bit4, Bit5}, because the subframes #0, #4, #5 and #9 of FDD and subframes #0, #1, #2, #5 and #6 of TDD definitely cannot be configured to be the MBSFN subframes. In FDD, Bit0 corresponds to subframe #1, Bit1 corresponds to subframe #2, Bit2 corresponds to subframe #3, Bit3 corresponds to subframe #6, Bit4 corresponds to subframe #7, and Bit5 corresponds to subframe #8; and in TDD, Bit0 corresponds to subframe #3, Bit1 corresponds to subframe #4, Bit2 corresponds to subframe #7, Bit3 corresponds to subframe #8, Bit4 corresponds to subframe #9, and Bit5 is retained without any practical use. When a certain Bit is configured to be "1", it indicates that the subframe corresponding to that Bit is configured to be an MBSFN subframe.

In order to enhance flexibility of configuration, the above allocation mode for subframes can also adopts an allocation mode of four continuous wireless frames, and {Bit0, Bit1, ...Bit23} are represented with 24 bits on the levels of wireless frames, wherein Bit0-Bit5 indicate the MBSFN subframes of the first wireless frame, Bit6-Bit11 indicate the MBSFN subframes of the second wireless frame, Bit12-Bit17 indicate the MBSFN subframes of the third wireless frame, and Bit118-Bit23 indicate the MBSFN subframes of the fourth wireless frame.

For example, the allocation mode of a certain SAP subframe = 111100, which indicates, for FDD, that subframes #1, #2, #3 and #6 are configured to be the MBSFN subframes; and for TDD, that subframes #3, #4, #7 and #8 are configured to be the MBSFN subframes.

In the present method, the period and offset of the MBSFN subframes for sending the information of the MCCH in the MBSFN subframes described by SAPs are defined, and the period is defined as a selecting period of the MBSFN subframes. For example, if the period defined by the SAP is 1, and the offset is 0, then the bitmap of the subframe is 0x001100. In the present invention, a selecting period of 2 is defined for the SAP, and the offset is defined as 1, then the wireless subframes in the second wireless frame in each two wireless frames in the SAP constitute the set of the MBSFN subframes of the present invention, as shown in FIG. 2.

Step 104, the network layer device sends the information of the MCCH according to the SAP configuration message.

In the step 104, the eNB determines the SAP to be used and which part of the MBSFN subframes in the SAP are specifically used to send the information of the MCCH according to the SAP configuration message received in step 103, and sends the information of the MCCH on the physical resources occupied by the MCCH.

The second embodiment of the present invention will be described with reference to the accompanying drawings.

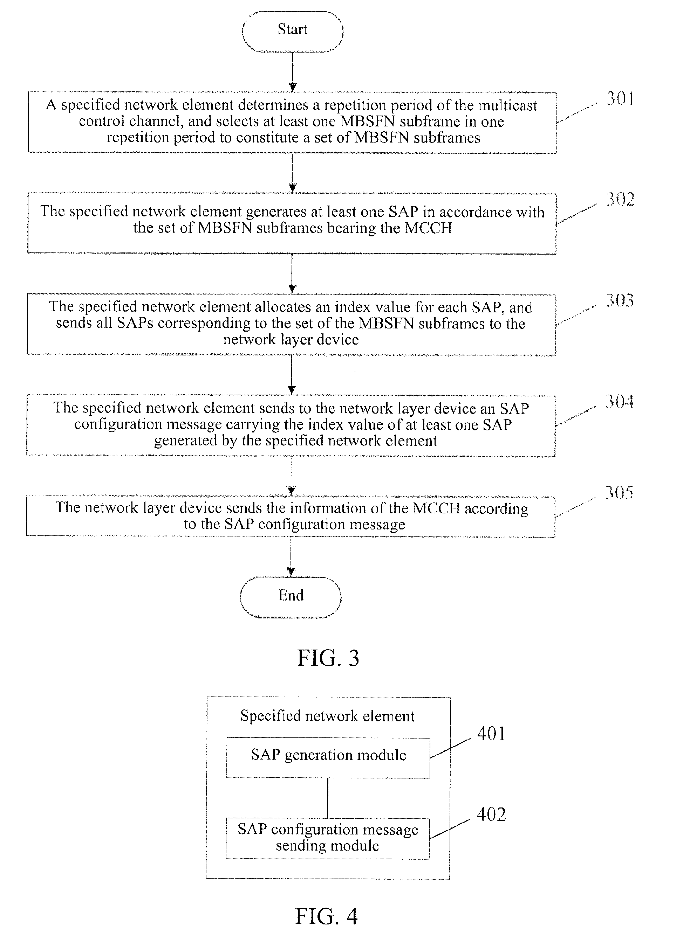

The second embodiment of the present invention provides a method for configuring resources occupied by a multicast control channel to solve the problem that UE cannot acquire the physical resources occupied by the MCCH. The flow of the method is shown in FIG. 3, wherein steps 301 and 302 are the same with steps 101 and 102 in the first embodiment of the present invention and thus will not be described here.

Step 303, the specified network element allocates an index value for each SAP, and sends all SAPs corresponding to the set of the MBSFN subframes to the network layer device.

In the step 303, the MCE numbers all SAPs generated in step 302, allocates the index value for each SAP, and sends all SAPs to the eNB in the form of an SAP list, for example, there are three SAPs, SAP-1, SAP-2 and SAP-3, and index values of 0-2 are allocated for them in turn.

After receiving the SAP list, the eNB stores all SAPs and the index values which are respectively correspond to each of the SAPs.

Step 304, the specified network element sends to the network layer device an SAP configuration message carrying the index value of the at least one SAP generated by the specified network element.

In the embodiment of the present invention, the SAP configuration message is specifically a session initiation message.

In the step 304, the MCE indicates the physical resources occupied by the eNB MCCH by carrying the SAP index values describing the set of the MBSFN subframes in the session initiation message.

In a case where the same set of MBSFN subframes corresponds to a plurality of SAPs, the MBSFN subframes corresponding to only part of the SAPs may be used. At this time, the bitmap of one SAP may be carried in the session initiation message, the number of bits of the bitmap is precisely the number of the SAPs corresponding to the set of the MBSFN subframes, i.e., each bit of the bitmap corresponds to one SAP; and if a certain bit is 0, it indicates that the SAP corresponding to that bit is not used, and if a certain bit is 1, it indicates that the SAP corresponding to that bit is used.

For example, a set of the MBSFN subframes corresponds to three SAPs, namely, SAP-1, SAP-2, and SAP-3; the SAPs corresponding to the services used in the embodiment of the present invention are SAP-1 and SAP-2, then the MCE carries in the session initiation message an SAP bitmap of "0x110".

Optionally, the MCE can also designate that the eNB sends the information of the MCCH on only part of the MBSFN subframes of one SAP, or sends the information of the MCCH on part of the MBSFN subframes of a plurality of SAPs. Please refer to step 103 in the first embodiment of the present invention for the specific selecting method.

Step 305, the network layer device sends the information of the MCCH according to the SAP configuration message.

In the step305, the eNB determines the SAP to be used and which part of the MBSFN subframes in the SAP are specifically used to send the information of the MCCH according to the SAP configuration message received in step 304, and sends the information of the MCCH on the physical resources occupied by the MCCH.

The embodiment of the present invention further provides a specified network element, as shown in FIG. 4, comprising:

an SAP generation module 401 used to generate at least one SAP in accordance with a set of the MBSFN subframes bearing the multicast control channel; and

an SAP configuration message sending module 402 used to send to a network layer device an SAP configuration message according to the at least one SAP generated by the SAP generation module 401, wherein the SAP configuration message carries at least one SAP generated by the SAP generation module 401 or an index value of at least one SAP generated by the SAP generation module 401 to indicate the network layer device to send information of the MCCH according to the corresponding SAP.

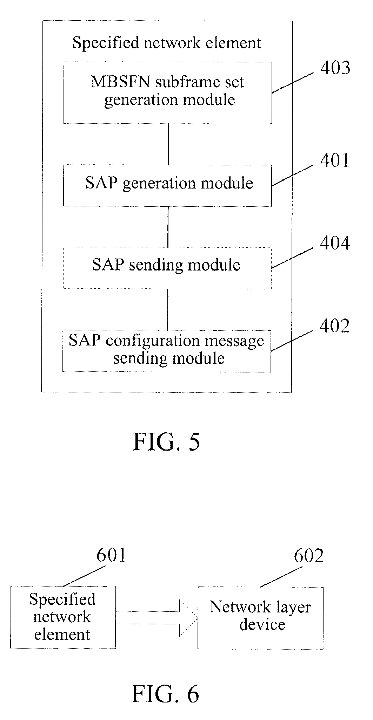

Furthermore, the above specified network element, as shown in FIG. 5, further comprises:

an MBSFN subframe set generation module 403 used to determine a repetition period of the MCCH, and select at least one MBSFN subframe in one repetition period to constitute a set of MBSFN subframes;

an SAP sending module 404 used to allocate an index value for each SAP, and send all SAPs corresponding to the set of MBSFN subframes to the network layer device.

The embodiment of the present invention further provides a system for configuring resources occupied by a multicast control channel, as shown in FIG. 6, comprising: a specified network element 601 and a network layer device 602.

The specified network element 601 is used to generate at least one SAP in accordance with a set of MBSFN subframes bearing the multicast control channel, and send to the network layer device 602 an SAP configuration message which carries at least one SAP generated by the specified network element 601 or an index value of at least one SAP generated by the specified network element 601 to indicate the network layer device 602 to send information of the MCCH according to the corresponding SAP; and the network layer device 602 is used to receive the SAP configuration message sent by the specified network element 601, and send the information of the MCCH according to the SAP indicated by the SAP configuration message.

Furthermore, the specified network element 601 is also used to determine a repetition period of the multicast control channel, and select at least one MBSFN subframe in one repetition period to constitute a set of MBSFN subframes.

Furthermore, the specified network element 601 is also used to allocate an index value for each SAP, and send all SAPs corresponding to the set of MBSFN subframes to the network layer device 602.

The above specified network element and the system for configuring resources occupied by a multicast control channel can be incorporated with the method for configuring resources occupied by a multicast control channel provided in the embodiment of the present invention, wherein the specified network element generates at least one subframe allocation pattern (SAP) in accordance with a set of MBSFN subframes bearing the MCCH, and sends to the network layer device the SAP configuration message to inform the network layer device to send the information of the MCCH according to the SAP generated by the specified network element, thereby solving the problem that UE cannot acquire the physical resources occupied by the MCCH.

A person skilled in the art can understand that all or part of the steps for implementing the above exemplary method of the present invention can be done by instructing related hardware with programs, and the programs may be stored in a computer readable storage medium, and includes one of the steps of the exemplary method or combinations thereof when executed.

In addition, each functional unit of each embodiment of the present invention may be realized in the form of hardware, or may be realized in the form of a software functional module. The integrated module can also be stored in a computer readable storage medium when realized in the form of a software functional module and sold or used as an independent product.

The storage medium mentioned above may be a read only memory, a disk or a laser disk.

The above embodiments are only specific examples of the present invention, but the scope of the present invention is not limited thereto. All modifications or equivalents that can be readily found by any person skilled in the art without departing from the technical scope of the present invention shall be within the scope of the present invention. Therefore, the scope of the present invention is defined by the appending claims below.

Industrial Applicability

The present invention provides a method, device and system for configuring resources occupied by a multicast control channel. The specified network element generates at least one subframe allocation pattern (SAP) in accordance with the set of Multicast/Broadcast over Single Frequency Network (MBSFN) subframes bearing the multicast control channel, and sends the SAP configuration message to the network layer device to indicate the network layer device to send the information of the MCCH according to the SAP generated by the specified network element, thereby solving the problem that UE cannot acquire the physical resources occupied by the MCCH.

**Claims**

1. A method for configuring resources occupied by a multicast control channel, comprising:

    a specified network element generating at least one subframe allocation pattern (SAP) in accordance with a set of Multicast/Broadcast over Single Frequency Network (MBSFN) subframes bearing the multicast control channel; and
    the specified network element sending an SAP configuration message to a network layer device, wherein the SAP configuration message carries at least one SAP generated by the specified network element or an index value of at least one SAP generated by the specified network element to indicate the network layer device to send information of the multicast control channel according to the corresponding SAP.

2. The method according to claim 1, wherein, before the step of the specified network element generating at least one SAP in accordance with a set of MBSFN subframes bearing the multicast control channel, the method further comprises:

    the specified network element determining a repetition period of the multicast control channel, and selecting at least one MBSFN subframe in one repetition period to constitute a set of MBSFN subframes.

3. The method according to claim 1, wherein, if the SAP configuration message carries an index value of at least one SAP generated by the specified network element, then before the step of sending an SAP configuration message to the network layer device, the method further comprises:

    the specified network element allocating the index value for each SAP, and sending all SAPs corresponding to the set of MBSFN subframes to the network layer device.

4. The method according to claim 1, wherein, the SAP configuration message further carries an indication message for indicating the network layer device to select part of MBSFN subframes in at least one SAP for sending the information of the multicast control channel, and the indication message comprises:

    an MBSFN subframe bitmap of each SAP, for indicating the network layer device to determine the MBSFN subframes, in a corresponding SAP, used for sending the information of the multicast control channel according to the subframe bitmap; or,
    period and offset of wireless frames corresponding to subframes in the set of MBSFN subframes, for indicating the network layer device to determine the MBSFN subframes, in a corresponding SAP, used for sending the information of the multicast control channel according to the period and offset of the wireless frames.

5. A specified network element, comprising:

a subframe allocation pattern (SAP) generation module (401) configured to: generate at least one SAP in accordance with a set of Multicast/Broadcast over Single Frequency Network (MBSFN) subframes bearing a multicast control channel; and

an SAP configuration message sending module (402) configured to: send an SAP configuration message to a network layer device according to the at least one SAP generated by the SAP generating module, wherein the SAP configuration message carries at least one SAP generated by the SAP generation module or an index value of at least one SAP generated by the SAP generation module to indicate the network layer device to send information of the multicast control channel according to the corresponding SAP.

6. The specified network element according to claim 5, wherein the specified network element further comprises:
an MBSFN subframe set generation module (403) configured to: determine a repetition period of the multicast control channel, and select at least one MBSFN subframe in one repetition period to constitute the set of MBSFN subframes.

7. The specified network element according to claim 5, wherein the specified network element further comprises:

an SAP sending module (404) configured to: allocate the index value for each SAP, and send all SAPs corresponding to the set of MBSFN subframes to the network layer device.

8. A system for configuring resources occupied by a multicast control channel, comprising a specified network element (601) and a network layer device (602); wherein,
the specified network element (601) is configured to: generate at least one subframe allocation pattern (SAP) in accordance with a set of Multicast/Broadcast over Single Frequency Network (MBSFN) subframes bearing the multicast control channel, and send an SAP configuration message to the network layer device, wherein the SAP configuration message carries at least one SAP generated by the specified network element or an index value of at least one SAP generated by the specified network element to indicate the network layer device to send information of the multicast control channel according to the corresponding SAP; and
the network layer device (602) is configured to: receive the SAP configuration message sent by the specified network element, and send the information of the multicast control channel according to the SAP indicated by the SAP configuration message.

9. The system according to claim 8, wherein,
the specified network element (601) is further configured to: determine a repetition period of the multicast control channel, and select at least one MBSFN subframe in one repetition period to constitute the set of MBSFN subframes.

10. The system according to claim 8, wherein,
the specified network element (601) is further configured to: allocate the index value for each SAP, and send all SAPs corresponding to the set of MBSFN subframes to the network layer device.

Start

A specified network element determines a repetition period of the multicast control channel, and selects at least one MBSFN subframe in one repetition period to constitute a set of MBSFN subframes

101

The specified network element generates at least one SAP in accordance with the set of MBSFN subframes bearing the MCCH

102

The specified network element sends to the network layer device an SAP configuration message which carries at least one SAP generated by the specified network element

103

The network layer device sends the information of the MCCH according to the SAP configuration message

104

End

FIG. 1

| Wireless frame 0 | Wireless frame 1 | Wireless frame 2 | Wireless frame 3 |

0 1 2 3 4 5 6 7 8 9 0 1 2 3 4 5 6 7 8 9 0 1 2 3 4 5 6 7 8 9 0 1 2 3 4 5 6

Select part of the subframes of the SAP through period-offset

FIG. 2

Start

A specified network element determines a repetition period of the multicast control channel, and selects at least one MBSFN subframe in one repetition period to constitute a set of MBSFN subframes — 301

The specified network element generates at least one SAP in accordance with the set of MBSFN subframes bearing the MCCH — 302

The specified network element allocates an index value for each SAP, and sends all SAPs corresponding to the set of the MBSFN subframes to the network layer device — 303

The specified network element sends to the network layer device an SAP configuration message carrying the index value of at least one SAP generated by the specified network element — 304

The network layer device sends the information of the MCCH according to the SAP configuration message — 305

End

FIG. 3

Specified network element

SAP generation module — 401

SAP configuration message sending module — 402

FIG. 4

Specified network element

MBSFN subframe set generation module — 403

SAP generation module — 401

SAP sending module — 404

SAP configuration message sending module — 402

FIG. 5

601

602

Specified network element

Network layer device

FIG. 6

# INTERNATIONAL SEARCH REPORT

| | International application No. |
|---|---|
| | PCT/CN2010/073353 |

**A. CLASSIFICATION OF SUBJECT MATTER**

H04W28/00 (2009.01) i

According to International Patent Classification (IPC) or to both national classification and IPC

**B. FIELDS SEARCHED**

Minimum documentation searched (classification system followed by classification symbols)

IPC: H04W,H04L

Documentation searched other than minimum documentation to the extent that such documents are included in the fields searched

Electronic data base consulted during the international search (name of data base and, where practicable, search terms used)

WPI,EPODOC,CNPAT,CNKI: MCCH, multicast control channel, resource, allocate, subframe, pattern, mode, send, index

**C. DOCUMENTS CONSIDERED TO BE RELEVANT**

| Category* | Citation of document, with indication, where appropriate, of the relevant passages | Relevant to claim No. |
|---|---|---|
| Y | CN101262626A (DATANG MOBILE COMMUNICATION DEVICE CO LT) 10 Sep. 2008( 10.09.2008）see abstract, claim 1 | 1-2，5-6，8-9 |
| Y | WO2008/044124A1 (NOKIA CORP) 17 Apr. 2008 （17.04.2008） see description page 3 lines 4, 14-17 | 1-2，5-6，8-9 |
| A | CN1960326A （ SAMSUNG COMMUNICATION TECH RES CO LTD BE et al.） 09 May 2007 (09.05.2007)  see the whole document | 1-10 |
| A | CN101005341A (ZHONGXING COMMUNICATION CO LTD SHENZHE) 25 Jul. 2007 （25.07.2007）see the whole document | 1-10 |

☐ Further documents are listed in the continuation of Box C.　　☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 23 Aug. 2010 （23.08.2010） | **02 Sep. 2010 (02.09.2010)** |
| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer **CHEN,Anan** Telephone No. (86-10)62411828 |

Form PCT/ISA /210 (second sheet) (July 2009)

## INTERNATIONAL SEARCH REPORT
### Information on patent family members

| International application No. |
|---|
| PCT/CN2010/073353 |

| Patent Documents referred in the Report | Publication Date | Patent Family | Publication Date |
|---|---|---|---|
| CN101262626A | 10.09.2008 | None | |
| WO2008/044124A1 | 17.04.2008 | US2008101270A1 | 01.05.2008 |
| | | EP2082593A1 | 29.07.2009 |
| | | CN101536554A | 16.09.2009 |
| CN1960326A | 09.05.2007 | CN100521651C | 29.07.2009 |
| CN101005341A | 25.07.2007 | WO2007082456A1 | 26.07.2007 |

Form PCT/ISA /210 (patent family annex) (July 2009)